# EUROPÄISCHE PATENTANMELDUNG

(11) **EP 1 004 640 A2**
(43) Veröffentlichungstag der Anmeldung: **31.05.2000**
(21) Anmeldenummer: 99123008.7
(22) Anmeldetag: 19.11.1999
(51) Int. Cl.: C09D 7/14, C09F 9/00, C09D 5/02

(54) **Verfahren zum Aufbringen von Beschichtungsstoffen mit Trocknungsbeschleuniger**

(30) Priorität: 23.11.1998 DE 19853973
(71) Anmelder: DEUTSCHE AMPHIBOLIN-WERKE VON ROBERT MURJAHN GmbH + Co. KG, 64372 Ober-Ramstadt (DE)
(72) Erfinder: Ackermann, Hermann, 64372 Ober-Ramstadt (DE); Befurt, Uwe, 64372 Ober-Ramstadt (DE)
(74) Vertreter: Pfenning, Meinig & Partner

(57) **Zusammenfassung**

Die Erfindung betrifft ein Verfahren zum Aufbringen eines bindemittelhaltigen Beschichtungsstoffes im Außen- und/oder Innenbereich wie Kunstharzputze oder Dispersionsfarben, bei dem dem Beschichtungsstoff vor dem Auftrag bei Temperaturen < 15°C ein mit dem Bindemittel chemisch reagierender Trocknungsbeschleuniger zugesetzt wird.

## Beschreibung

Die Erfindung betrifft ein Verfahren zum Auftrag eines Beschichtungsstoffes im Außen- und/oder Innenbereich, wie Dispersionsfarben oder Kunstharzputzen, bei dem in Abhängigkeit von den Witterungsverhältnissen vor dem Auftrag des Beschichtungsstoffes vor Ort ein mit dem Bindemittel chemisch reagierender Trocknungsbeschleuniger zugegeben wird.

Dispersionsfarben und Kunstharzputze haben den Nachteil, da sie im wesentlichen auf wäßriger Basis beruhen, daß bei tiefen Temperaturen nur eine sehr langsame Trocknung eintritt. Dadurch ist auch die Gefahr gegeben, daß bei den bekannten Dispersionsfarben und Kunstharzputzen bei Regen ein Abwaschen des Beschichtungsstoffes von der Fassade erfolgen kann.

Im Stand der Technik wurde deshalb versucht, diesen Nachteil dadurch zu beseitigen, daß diesen einkomponentigen Formulierungen bereits bei der Herstellung ein Trocknungsbeschleuniger zugegeben wird. Aus der DE 197 11 664 C1 ist eine derartige Beschichtungsmasse und deren Verwendung bekannt.

Es hat sich nun aber gezeigt, daß auch diese einkomponentigen Formulierungen, bei denen bereits ein Trocknungsbeschleuniger enthalten ist, oft keine befriedigenden Ergebnisse liefern. Dies ist darauf zurückzuführen, daß die Witterungsbedingungen vor Ort nicht vorhersehbar sind und starken Temperaturschwankungen unterliegen. Die Beschichtungsstoffe des Standes der Technik mit voreingestelltem Trocknungsbeschleuniger weisen nämlich bei Temperaturen oberhalb 10 °C eine schlechte Verarbeitbarkeit auf und sind oberhalb 15 °C praktisch nicht mehr verarbeitbar. Damit sind aber nicht nur verarbeitungstechnische Nachteile verbunden, sondern dies führt auch dazu, daß die mit dem Beschichtungsstoff aufgebrachte Oberfläche ein ungleichmäßiges Strukturbild aufweist.

Ausgehend hiervon ist es die Aufgabe der vorliegenden Erfindung, ein neuartiges Verfahren vorzuschlagen, mit dem unter jeden Witterungsverhältnissen ein optimaler Auftrag des Beschichtungsstoffes möglich ist.

Die Erfindung wird durch die kennzeichnenden Merkmale des Patentanspruches 1 gelöst. Die Unteransprüche zeigen vorteilhafte Weiterbildungen auf.

Erfindungsgemäß wird somit vorgeschlagen, daß vor Ort vor dem Auftrag des Beschichtungsstoffes in Abhängigkeit von den Witterungsverhältnissen, d.h. insbesondere von der Temperatur, ein Trocknungsbeschleuniger dem Beschichtungsstoff zugesetzt wird. Der Trocknungsbeschleuniger reagiert chemisch mit dem Bindemittel. Dadurch wird eine optimale Anpassung des Systems an die Umgebungsbedingungen erreicht. Dies führt dazu, daß der Beschichtungsstoff nicht nur problemlos aufzutragen ist, sondern daß er auch von einem ggf. einsetzenden Niederschlag nicht abgewaschen werden kann und eine saubere, glatte, optisch einwandfreie Oberfläche aufweist.

Die Erfindung ist dabei auf alle aus dem Stand der Technik bisher bekannten bindemittelhaltigen Dispersionsfarben und Kunstharzputze anwendbar. Der Beschichtungsstoff kann außer der Kunstharzdispersion an und für sich bekannte Pigmente, Füllstoffe und Additive enthalten. Es ist hierbei aber erforderlich, daß die Kunstharzdispersion über Carboxylatgruppen verfügt, die bei der Formulierung blockiert worden sind. Dies wird vorteilhafterweise wie in der DE 197 11 664 C1 beschrieben, mit Ammoniaklösung erreicht. Nach der Ammoniakverdunstung kann dann die Vernetzungsreaktion mit dem Trocknungsbeschleuniger erfolgen.

Beim erfindungsgemäßen Verfahren ist es besonders bevorzugt, wenn der Trocknungsbeschleuniger bei Temperaturen unterhalb 10 °C zugesetzt wird, da oberhalb die Temperatur die Trocknung ohne diese erfindungsgemäße Maßnahme so verlangsamt ist, daß die Verarbeitung problematisch wird.

Beim erfindungsgemäßen Verfahren ist besonders hervorzuheben, daß es durch die Möglichkeit der mengenmäßig abgestuften Zugabe des Trocknungsbeschleunigers in Abhängigkeit von den vor Ort gegebenen Witterungsverhältnissen besonders flexibel ist. Grundsätzlich ist es möglich, den Trocknungsbeschleuniger in einer Menge von 0,05 bis 2,5 Gew.-%, bevorzugt 0,1 bis 1,0 Gew.-%, dem Beschichtungsstoff zuzugeben.

Beim Trocknungsbeschleuniger sind an und für sich alle Salze einsetzbar, insbesondere mehrwertige, Erdalkali und Übergangsmetallsalze. Beispiele für Salze sind Zinkacetat sowie Aluminiumsalze.

Um eine gute Durchmischung des Trocknungsbeschleunigers mit dem Beschichtungsstoff zu erreichen, ist es vorteilhaft, wenn der Trocknungsbeschleuniger vor Ort mittels eines an und für sich bekannten Rührwerks in den Beschichtungsstoff eingearbeitet wird. Hierbei ist auf eine homogene Verteilung des Beschichtungsstoffes zu achten.

Die Erfindung wird nachfolgend anhand eines Formulierungsbeispieles näher erläutert:

### Ausführungsbeispiel:

Kunstharzputz, bestehend aus
- Kunstharzdispersion mit Carboxylatgruppen
- Pigmenten
   - Titandioxid
   - anorganische/organische Buntpigmente
- Füllstoffen
   - Calciumcarbonate
   - Silikate
- Additiven u.a.
   - Ammoniaklösung
   - Verdickungsmittel wie Cellulosederivaten
   - anorganische Verdickungsmittel
   - Konservierungsstoffe

Trocknungsbeschleunigerlösung, bestehend aus
- Zinkacetat gelöst in Wasser

## Patentansprüche

1. Verfahren zum Aufbringen eines bindemittelhaltigen Beschichtungsstoffes im Außen- und/oder Innenbereich wie Kunstharzputze oder Dispersionsfarben, dadurch gekennzeichnet, daß dem Beschichtungsstoff vor dem Auftrag bei Temperaturen < 15 °C ein mit dem Bindemittel chemisch reagierender Trocknungsbeschleuniger zugesetzt wird.

2. Verfahren nach Anspruch 1, dadurch gekennzeichnet, daß der Trocknungsbeschleungiger bei Temperaturen < 10 °C zugesetzt wird.

3. Verfahren nach Anspruch 2 oder 2, dadurch gekennzeichnet, daß die Menge des zuzusetzenden Trocknungsbeschleunigers im Bereich von 0,05 - 2,5 Gew.-% liegt, vorzugsweise 0,1 - 1,0 Gew.-%.

4. Verfahren nach mindestens einem der Ansprüche 1 bis 3, dadurch gekennzeichnet, daß als Trocknungsbeschleuniger Salze eingesetzt werden.

5. Verfahren nach Anspruch 4, dadurch gekennzeichnet, daß als Salze mehrwertige Erdalkalisalze, Aluminiumsalze oder Salze von Übergangselementen wie Zink eingesetzt werden.

6. Verfahren nach Anspruch 4 oder 5, dadurch gekennzeichnet, daß als Salz Zinkacetat verwendet wird.
